# EUROPEAN PATENT APPLICATION

(11) **EP 4 624 178 A1**
(43) Date of publication of application: **01.10.2025**
(21) Application number: 24196461.8
(22) Date of filing: 26.08.2024
(51) Int. Cl.: B41J 2/21, G01B 11/00, G01N 21/00, G06F 11/32

(54) **INFORMATION PROCESSING SYSTEM, INFORMATION PROCESSING PROGRAM, AND INSPECTION APPARATUS**

(30) Priority: 25.03.2024 JP 2024048746
(71) Applicant: FUJIFILM Business Innovation Corp., Minato-ku Tokyo (JP)
(72) Inventor: BETSUYAKU, Takashi, Yokohama-shi, Kanagawa (JP)
(74) Representative: Kurig, Thomas

(57) **Abstract**

An information processing system includes a processor configured to, in a case of executing non-ejection correction of increasing an ejection amount of a nozzle adj acent to a non-ejection nozzle in an image forming apparatus that forms an image by ejecting liquid droplets from plural nozzles based on image data, transmit correction information related to the non-ejection correction to an inspection apparatus that scans an image formed by the image forming apparatus and inspects the image.

## Description

### BACKGROUND OF THE INVENTION

### (i) Field of the Invention

The present invention relates to an information processing system, an information processing program, and an inspection apparatus.

### (ii) Description of Related Art

JP2013-252691A discloses a recording apparatus including a recording head that has a plurality of nozzles which eject ink, and a transport unit that transports a recording medium, and continuously recording a plurality of images related to a transport direction of the recording medium by using the recording head. The recording apparatus includes an inspection pattern recording unit that records each of plurality of inspection patterns for detecting an ejection defect of the recording head between the images by using the recording head, a scanning unit that scans the plurality of inspection patterns, and a sorting unit that sorts the plurality of images into a state in which continuous ejection defects occurs, a state in which an accidental ejection defect occurs, or a state of normal ejection occurs, based on inspection results of the plurality of inspection patterns scanned by the scanning unit.

JP2018-51846A discloses an image inspection apparatus including a scan image acquisition unit that acquires scan image data obtained in such a way that an image scanning apparatus scans a defective nozzle detection pattern recorded in a first region of a recording medium using a single-pass type inkjet printing apparatus and a printed image recorded in a second region, which is a region different from the first region of the recording medium, by using the inkjet printing apparatus, a defective nozzle detection processing unit that analyzes first scan image data, which is a scan image of the defective nozzle detection pattern, and detects a defective nozzle in a line-type inkjet head used for recording the defective nozzle detection pattern, a history information storage unit that stores a history of defective nozzle detection results obtained by the defective nozzle detection processing unit, an image defect detection processing unit that analyzes second scan image data, which is the scan image of the printed image and detects image defect of the printed image, and a defective nozzle specification processing unit that collates information related to the image defect detected by the image defect detection processing unit with the history information stored in the history information storage unit, and specifies the defective nozzle which causes the image defect.

JP2016-110294A discloses a control device including a first determination unit that determines whether or not a defect occurs in an image based on print data, which is printed on a sheet by a printing unit including a print head having a nozzle row arranged in a direction intersecting with a transport direction of the sheet, a first instruction unit that, in a case where the first determination unit determines that the defect occurs in the image, instructs a printing control unit that controls the printing unit to print a test pattern, a second determination unit that determines whether or not a defect occurs in the test pattern printed on the sheet by the printing unit based on the instruction from the first instruction unit, and a second instruction unit that, in a case where the second determination unit determines that the defect occurs in the test pattern, instructs the printing control unit to stop printing of the printing unit.

### SUMMARY OF THE INVENTION

As the inspection apparatus, an inspection apparatus can be considered that scans an image, which is formed by ejecting liquid droplets from a plurality of nozzles by an image forming apparatus, and inspects the image. In such an inspection apparatus, in a case where the image forming apparatus executes non-ejection correction of increasing the ejection amount of a nozzle adjacent to a non-ejection nozzle, inspection cannot be performed in consideration of information related to the non-ejection correction.

An object of the present disclosure is to enable an inspection apparatus that scans an image formed by an image forming apparatus and inspects the image to perform inspection in consideration of information related to non-ejection correction.

According to a first aspect of the present invention, there is provide an information processing system including a processor configured to, in a case of executing non-ejection correction of increasing an ejection amount of a nozzle adjacent to a non-ejection nozzle in an image forming apparatus that forms an image by ejecting liquid droplets from a plurality of nozzles based on image data, transmit correction information related to the non-ejection correction to an inspection apparatus that scans an image formed by the image forming apparatus and inspects the image.

According to a second aspect of the present invention, in the first aspect, the correction information may include information indicating execution of the non-ejection correction and information indicating a position of the non-ejection nozzle.

According to a third aspect of the present invention, in the second aspect, the correction information may include information indicating an inspection accuracy set by a user.

According to a fourth aspect of the present invention, in any one of the first to third aspects, the processor may be configured to, in a case where an inspection mode based on the non-ejection correction is set as an inspection mode of the inspection apparatus, transmit the correction information related to the non-ejection correction to the inspection apparatus.

According to a fifth aspect of the present invention, in the fourth aspect, the processor may be configured to, in a case where normal inspection is set as the inspection mode of the inspection apparatus, not execute the transmission of the correction information to the inspection apparatus.

According to a sixth aspect of the present invention, in the fifth aspect, the processor may be configured to notify a user of the set inspection mode via a notification unit.

According to a seventh aspect of the present invention, there is provided an information processing program causing a computer to execute a process including, in a case of executing non-ejection correction of increasing an ejection amount of a nozzle adjacent to a non-ejection nozzle in an image forming apparatus that forms an image by ejecting liquid droplets from a plurality of nozzles based on image data, transmitting correction information related to the non-ejection correction to an inspection apparatus that scans an image formed by the image forming apparatus and inspects the image.

According to an eighth aspect of the present invention, there is provided an inspection apparatus including a scanning unit that scans an image formed by an image forming apparatus that forms an image by ejecting liquid droplets from a plurality of nozzles based on image data, and an inspection unit that inspects the image scanned by the scanning unit based on the image data, and, in a case of executing non-ejection correction of increasing an ejection amount of a nozzle adjacent to a non-ejection nozzle in the image forming apparatus, performs inspection after acquiring information related to the non-ejection correction.

According to a ninth aspect of the present invention, in the eighth aspect, the inspection unit may perform the inspection by lowering an inspection accuracy in a case of executing the non-ejection correction in the image forming apparatus.

According to the configuration of the first aspect of the present invention, the inspection apparatus can perform the inspection in consideration of the information related to the non-ejection correction.

According to the configuration of the second aspect of the present invention, the inspection apparatus can perform the inspection in consideration of the information indicating the execution of the non-ejection correction and the information indicating the position of the non-ejection nozzle.

According to the configuration of the third aspect of the present invention, the inspection apparatus can perform the inspection in consideration of the information indicating the inspection accuracy set by the user.

According to the configuration of the fourth aspect of the present invention, in a case where the inspection mode based on the non-ejection correction is set, the inspection apparatus can perform the inspection in consideration of the information related to the non-ejection correction.

According to the configuration of the fifth aspect of the present invention, unnecessary transmission of the correction information to the inspection apparatus can be suppressed, as compared with a case where the processor constantly executes the transmission of the correction information to the inspection apparatus.

According to the configuration of the sixth aspect of the present invention, the user can recognize the set inspection mode.

According to the configuration of the seventh aspect of the present invention, the inspection apparatus can perform the inspection in consideration of the information related to the non-ejection correction.

According to the configuration of the eighth aspect of the present invention, the inspection apparatus can perform the inspection in consideration of the information related to the non-ejection correction.

According to the configuration of a ninth aspect of the present invention, the inspection defect is suppressed compared to a case of performing the inspection with a certain inspection accuracy regardless of a case of executing the non-ejection correction in the image forming apparatus.

### BRIEF DESCRIPTION OF THE DRAWINGS

Exemplary embodiment(s) of the present invention will be described in detail based on the following figures, wherein:
Fig. 1 is a schematic diagram showing an image forming system according to the present exemplary embodiment;
Fig. 2 is a block diagram showing an example of a hardware configuration of an image forming apparatus according to the present exemplary embodiment;
Fig. 3 is a schematic diagram showing an example of an input screen according to the present exemplary embodiment;
Fig. 4 is a block diagram showing an example of a functional configuration of a control device in the image forming apparatus according to the present exemplary embodiment;
Fig. 5 is a block diagram showing an example of a hardware configuration of an inspection apparatus according to the present exemplary embodiment;
Fig. 6 is a schematic diagram showing an example of a result display screen according to the present exemplary embodiment;
Fig. 7 is a schematic diagram showing an example of the result display screen according to the present exemplary embodiment;
Fig. 8 is a block diagram showing an example of a functional configuration of a control device of the inspection apparatus according to the present exemplary embodiment;
Fig. 9 is a flowchart illustrating an example of a flow of a transmission process executed in the image forming apparatus according to the present exemplary embodiment; and
Fig. 10 is a flowchart showing an example of the flow of an inspection process executed in the inspection apparatus according to the present exemplary embodiment.

### DETAILED DESCRIPTION OF THE INVENTION

An example of an exemplary embodiment according to the present invention will be described below with reference to the drawings.

### <Image Forming System 10>

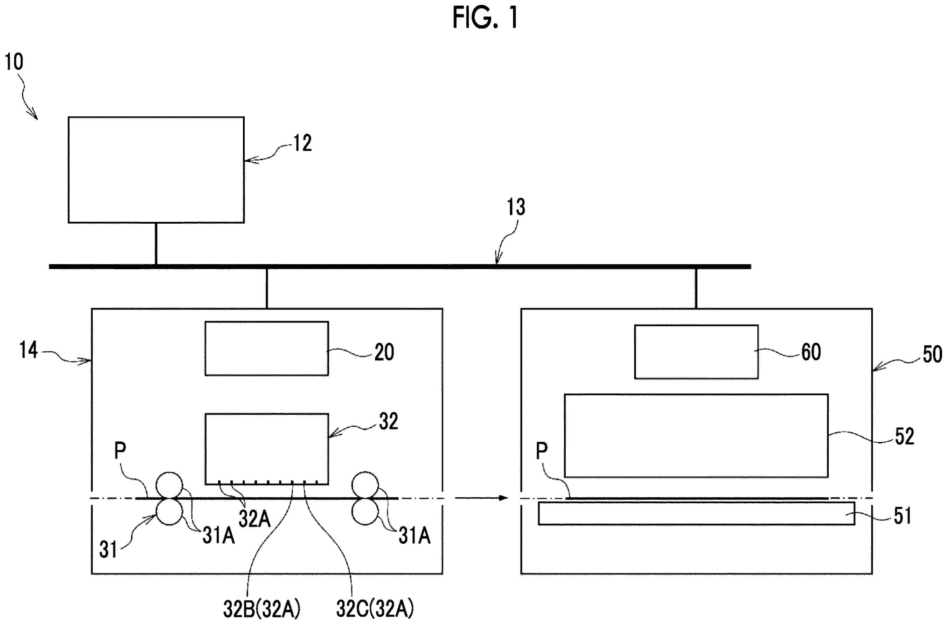

An image forming system 10 according to the present exemplary embodiment will be described. Fig. 1 is a schematic diagram showing the image forming system 10 according to the present exemplary embodiment.

The image forming system 10 is an example of an information processing system and is a system that forms an image on a recording medium such as paper. As shown in Fig. 1, the image forming system 10 includes an image processing system 12, an image forming apparatus 14, and an inspection apparatus 50. The image includes text and an image area. The image area is a part other than the text, and the image area includes a part (for example, a solid image) having a region equal to or greater than a predetermined area or width.

As shown in Fig. 1, each unit of the image forming system 10 is connected via a communication line 13. The communication line 13 is, for example, a communication line using at least one of a wired or wireless connection. Specifically, as the communication line 13, for example, various networks, such as a Local Area Network (LAN) and the Internet, can be used. Hereinafter, each unit of the image forming system 10 will be described.

### <Image Processing System 12>

The image processing system 12 executes a conversion process of converting first image data transmitted from a user terminal (not shown) into second image data that can be used to execute image formation in the image forming apparatus 14.

Specifically, the image processing system 12, executes a process (for example, rasterization process) of converting PDL data as a first image into bitmap data, and executes the conversion process of performing conversion into RIP data as the second image data. The RIP data is data represented as bitmap data.

The PDL data is data described in a Page Description Language (PDL) that can be interpreted by the image processing system 12 and the image forming apparatus 14. The page description language is a computer programming language for causing the image processing system 12 and the image forming apparatus 14 to execute image processing and the like. Various formats such as PostScript (PS, registered trademark) format are present as a format of the page description language.

Moreover, the image processing system 12 transmits the RIP data generated by the conversion process to the image forming apparatus 14 through the communication line 13.

### <Image Forming Apparatus 14>

The image forming apparatus 14 is an apparatus that forms an image by ejecting liquid droplets from a plurality of nozzles based on image data. Specifically, the image forming apparatus 14 is configured as an inkjet recording apparatus that forms an image by ejecting ink droplets from a plurality of nozzles 32A to a recording medium P based on the RIP data transmitted from the image processing system 12.

The conversion process of converting the PDL data into the RIP data may be executed in the image forming apparatus 14. In this case, the image forming apparatus 14 forms an image based on the RIP data generated by the conversion process performed by the image forming apparatus 14.

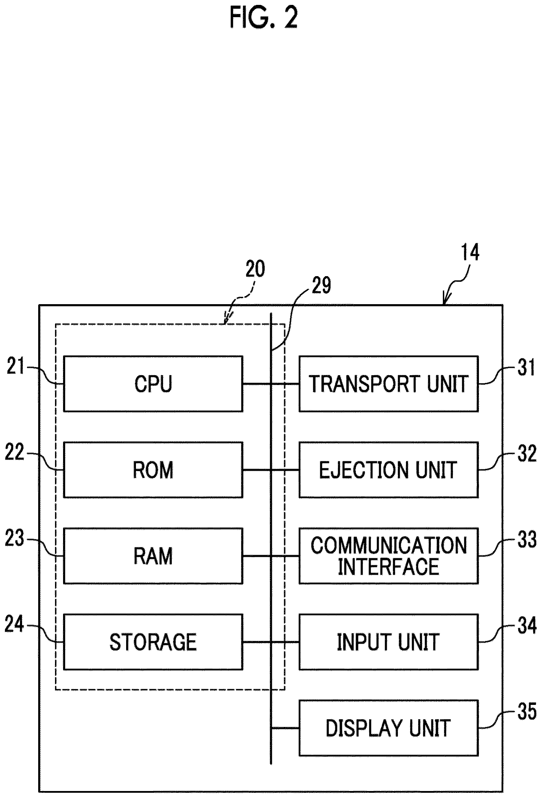

In the present exemplary embodiment, as shown in Figs. 1 and 2, the image forming apparatus 14 includes a transport unit 31, an ejection unit 32, and a control device 20. As shown in Fig. 2, the image forming apparatus 14 includes a communication interface 33, an input unit 34, and a display unit 35.

As the recording medium P, paper, film, or other recording media can be used. In addition, as the paper, single-sheet paper (so-called cut paper) or continuous paper such as roll paper can be used. In addition, as the paper, types such as plain paper and thick paper can be used.

The transport unit 31 is a component that transports the recording medium P. Specifically, the transport unit 31 has a transport member 31A configured by a pair of transport rollers. As the transport unit, for example, a transport unit including a transport member such as a transport belt and a transport drum may be used.

The ejection unit 32 ejects ink droplets from the plurality of nozzles 32A to the recording medium P transported by the transport unit 31. The ejection unit 32 has, for example, an ejection head (not shown) corresponding to each color of yellow (Y), magenta (M), cyan (C), and black (K), and ejects ink droplets of each color to the recording medium P from the ejection head. The ejection unit 32 may be configured to have an ejection head that ejects monochromatic (for example, black) ink.

The ejection unit 32 ejects ink droplets from the nozzle 32A by a known method such as a thermal method or a piezoelectric method. In addition, the ink used in the ejection unit 32 includes, for example, aqueous ink and oil-based ink.

In a case where a non-ejection nozzle 32B that does not eject ink droplets is present among the plurality of nozzles 32A, the ejection unit 32 can execute non-ejection correction of increasing the ejection amount of an adjacent nozzle 32C which is adjacent to the non-ejection nozzle 32B. The adjacent nozzle 32C is a nozzle adjacent to the non-ejection nozzle 32B in a transport direction of the recording medium P or the width direction (direction intersecting the transport direction).

In the image forming apparatus 14, a specifying process of specifying the non-ejection nozzle 32B is executed. In the specifying process, the ink droplets are ejected from the plurality of nozzles 32A to form the test image in advance, and the non-ejection nozzle 32B is specified from the position of the white omission in the test image. Position information indicating the position of the non-ejection nozzle 32B specified by the specifying process is stored in, for example, a storage 24 described below.

The communication interface 33 is a connection unit for communicating with other apparatuses (for example, the image processing system 12 and the inspection apparatus 50). Specifically, the communication interface 33 communicates with other apparatuses via the communication line 13 using at least one of a wired or wireless connection.

The display unit 35 is an example of a notification unit, and notifies a user of presentation information by displaying the presentation information to be presented to the user. The display unit 35 is configured of, for example, a liquid crystal display or an organic Electro-Luminescence (EL) display.

The input unit 34 is a component to which an instruction and condition setting by the user are input. In the present exemplary embodiment, the input unit 34 is configured with a touch panel integrated with the display unit 35. The touch panel is configured with, for example, a resistive film method and a capacitance method touch panels, and the user inputs are performed by a contact operation of the user.

The instruction by the user includes an execution instruction to execute a job related to the process that can be executed in the image forming apparatus 14. Examples of the process include an image forming process of forming an image on the recording medium P. The job refers to a processing unit of an operation executed by a single instruction from the user.

In addition, the user can execute the setting of various conditions via the input unit 34. For example, the user can set the type of the recording medium P (for example, plain paper, thick paper, or the like) on which an image is formed.

In the present exemplary embodiment, the execution of the non-ejection correction in the ejection unit 32 is associated with a specific type (for example, plain paper) of the recording medium P, and the non-ejection correction is executed in a case where the specific type is set. Further, the user may be allowed to set whether or not to execute the non-ejection correction via the input unit 34.

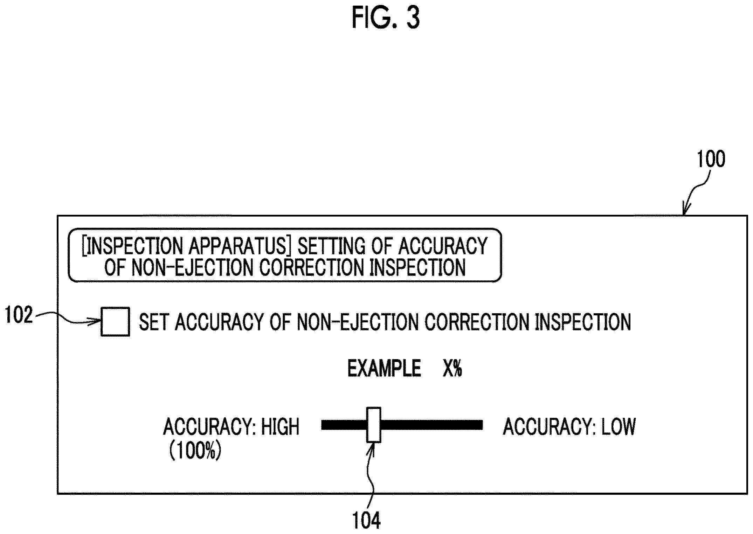

Further, in the present exemplary embodiment, an input screen 100 (refer to Fig. 3) on which an inspection mode and inspection accuracy in the inspection apparatus 50 can be input is displayed on the display unit 35 as the input unit 34.

Here, the inspection apparatus 50 is an apparatus that inspects the image formed by the image forming apparatus 14, and can execute an inspection mode based on the non-ejection correction (hereinafter, referred to as non-ejection correction inspection) and normal inspection. The non-ejection correction inspection is an inspection mode in consideration of the non-ejection correction in the image forming apparatus 14, and is performed with a lower inspection accuracy than a normal inspection.

In the input screen 100 (see Fig. 3) described above, whether or not to execute the non-ejection correction inspection can be set in the inspection apparatus 50. For example, by performing input to a check box 102 on the input screen 100, the execution of the non-ejection correction inspection can be set. By not performing input to the check box 102, the normal inspection is set. In this way, whether or not to execute the non-ejection correction inspection (normal inspection) is indicated by the input to the check box 102. Therefore, the input screen 100 functions as the notification unit that notifies the user of the set inspection mode.

In addition, in a case where the execution of the non-ejection correction inspection is set, the inspection accuracy can be set for the text. As the inspection accuracy, a tolerance for text blurring can be set. By setting the tolerance, a text with the tolerance blurring is permitted in the image inspection. In the example shown in Fig. 3, the tolerance is set by moving an operation bar 104 to the left and right. In this case, the text (in Fig. 3, "example") displayed on the input screen 100 may be displayed in a blurred manner in accordance with the set tolerance.

The input unit 34 may be configured with input keys (for example, a keyboard, operation buttons, or the like) on which input operations are performed by the user.

The control device 20 is a device that controls each unit of the image forming apparatus 14. The control device 20 has a function as a computer and includes a Central Processing Unit (CPU) 21, a Read Only Memory (ROM) 22, a Random Access Memory (RAM) 23, and a storage 24, as shown in Fig. 2. Each of the CPU 21, the ROM 22, the RAM 23, and the storage 24 is connected to each other by a bus 29.

The CPU 21 is a central processing unit, and executes various programs including an information processing program or controls each unit. In addition, the CPU 21 is an example of a processor. The ROM 22 stores various programs including an information processing program and various types of data. The RAM 23 temporarily stores a program or data as a work area.

The storage 24 is configured by one or more storage media such as a Hard Disk Drive (HDD), a Solid State Drive (SSD), or a flash memory and stores various programs including an operating system and various data. The information processing program may be stored in the storage 24.

In the control device 20, the CPU 21 reads various programs including the information processing program from the ROM 22 or from the storage 24 and executes the programs by using the RAM 23 as a work area. The CPU 21 executes the information processing program to implement various functions.

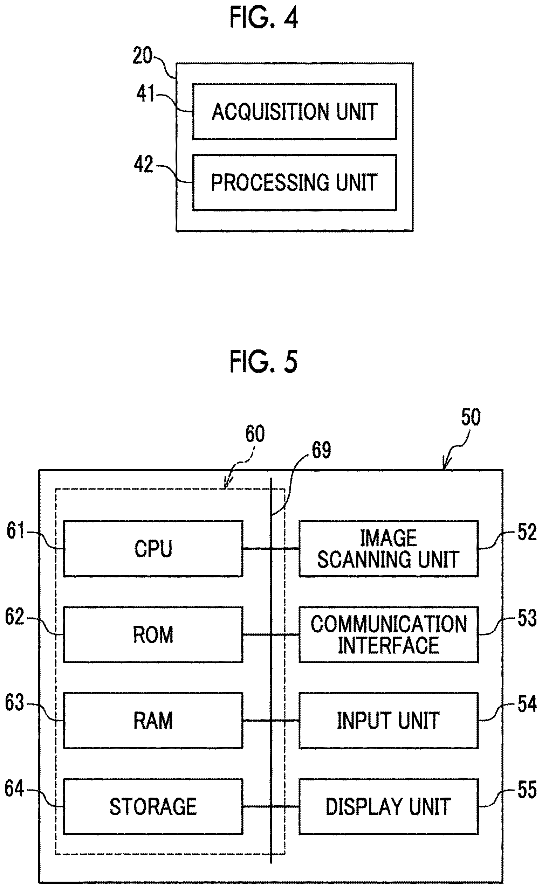

In the control device 20, the CPU 21 executes the information processing program to function as an acquisition unit 41 and a processing unit 42 as shown in Fig. 4.

The acquisition unit 41 acquires the information on the instruction and condition setting input by the user via the input unit 34. The instruction includes, for example, an execution instruction for causing the image forming apparatus 14 to execute the image forming process. In addition, the acquisition unit 41 acquires information (hereinafter, referred to as correction information) related to non-ej ection correction. The correction information includes execution information indicating the execution of the non-ejection correction in the image forming apparatus 14, position information indicating the position of the non-ejection nozzle 32B, accuracy information indicating the inspection accuracy set by the user, and the like.

In the present exemplary embodiment, by setting the type of the recording medium P, whether or not to execute the non-ejection correction is set, and the execution information is acquired based thereon. As described above, the position information is stored in the storage 24 by the specifying process and is acquired from the storage 24. The position information may be referred to as position information indicating a position at which the non-ejection correction is executed. In addition, in the present exemplary embodiment, the inspection accuracy is set on the input screen 100, and the accuracy information is acquired based on the inspection accuracy.

In the case of executing the non-ejection correction in the image forming apparatus 14, the processing unit 42 executes a process of transmitting the correction information to the inspection apparatus 50. Specifically, the processing unit 42 executes a transmission process which will be described below.

### <Inspection Apparatus 50>

The inspection apparatus 50 is an apparatus that inspects an image formed by the image forming apparatus 14. As shown in Fig. 1, the inspection apparatus 50 includes a stand 51, an image scanning unit 52, and a control device 60. Further, as shown in Fig. 5, the inspection apparatus 50 includes a communication interface 53, an input unit 54, and a display unit 55.

The stand 51 is a component on which the recording medium P, on which the image is formed by the image forming apparatus 14, is placed. The recording medium P is placed on the stand 51 in a state where the image formed on the recording medium P is directed toward the image scanning unit 52 side (upper side in Fig. 1).

The image scanning unit 52 is an example of a scanning unit, and is a component (for example, a scanner) that scans the image formed by the image forming apparatus 14. The image scanning unit 52 generates image data which is an inspection target (hereinafter, referred to as inspection data), by, for example, optically scanning the image of the recording medium P placed on the stand 51 and converting the image into a digital signal. In the inspection apparatus 50, the image is inspected by comparing the inspection data with the RIP data.

The communication interface 53 is a connection unit for communicating with other apparatuses (for example, the image processing system 12 and the image forming apparatus 14). Specifically, the communication interface 53 communicates with other apparatuses via the communication line 13 using at least one of a wired or wireless connection.

The display unit 55 is a notification unit that notifies a user of presentation information by displaying the presentation information to be presented to the user. The display unit 55 is configured of, for example, a liquid crystal display or an organic electro-luminescence (EL) display.

The input unit 54 is a component to which an instruction and condition setting by the user are input. In the present exemplary embodiment, the input unit 54 is configured with a touch panel integrated with the display unit 55. The touch panel is configured with, for example, a resistive film method and a capacitance method touch panels, and the user inputs are performed by a contact operation of the user.

The instruction by the user includes an execution instruction to execute a process that can be executed in the inspection apparatus 50. Examples of the process include an inspection process of inspecting an image formed by the image forming apparatus 14.

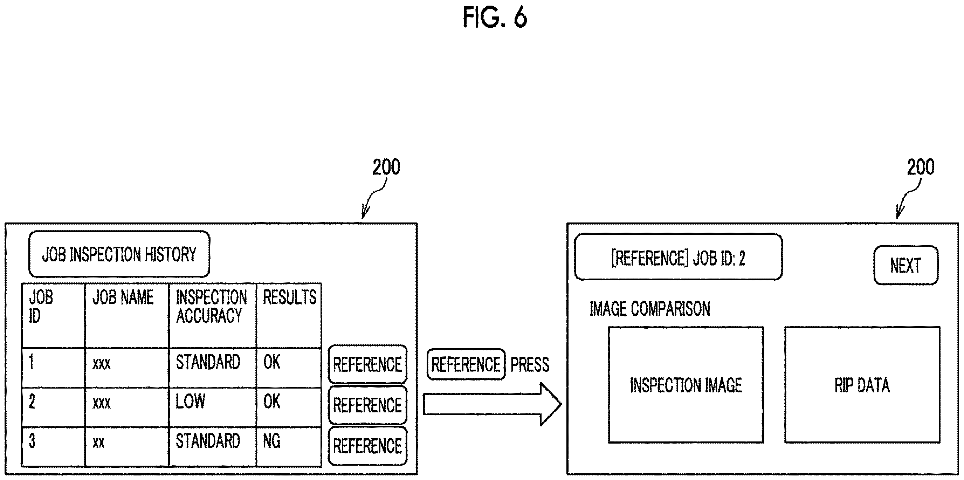

Further, in the present exemplary embodiment, a result display screen 200 (see Fig. 6) that displays result information indicating an inspection result in the inspection apparatus 50 can be displayed on the display unit 55 as the input unit 54. For example, as shown in Fig. 6, the inspection result is displayed for each job executed by the image forming apparatus 14. In addition, as shown in Fig. 6, the result information includes information indicating a job ID, a job name, an inspection accuracy, and an inspection result. The job ID is identification information for identifying a job related to the image forming process.

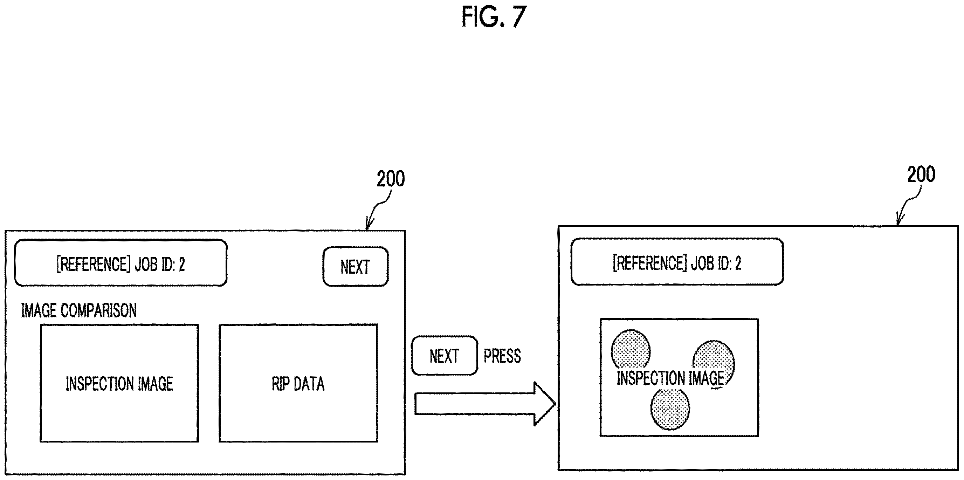

Further, the inspection data and the RIP data related to each inspection result may be displayed on the result display screen 200. In the example shown in Fig. 6, the inspection data and the RIP data are displayed by pressing a "reference" button provided for each job. Further, as shown in Fig. 7, an area where the inspection accuracy is lowered may be displayed. In the example shown in Fig. 7, by pressing a "next" button, the area where the inspection accuracy is lowered is clearly indicated by coloring. In the case where the inspection result is defective, the result display screen 200 may display information indicating an image defect reason.

The input unit 54 may be configured with input keys (for example, a keyboard, operation buttons, or the like) on which input operations are performed by the user.

The control device 60 is a device that controls each unit of the inspection apparatus 50. The control device 60 has a function as a computer and includes a Central Processing Unit (CPU) 61, a Read Only Memory (ROM) 62, a Random Access Memory (RAM) 63, and a storage 64, as shown in Fig. 5. Each of the CPU 61, the ROM 62, the RAM 63, and the storage 64 is connected to each other by a bus 69.

The CPU 61 is a central processing unit, and executes various programs including an information processing program or controls each unit. The ROM 62 stores various programs including an information processing program and various types of data. The RAM 63 temporarily stores programs or data as a work area.

The storage 64 is configured by one or more storage media such as a Hard Disk Drive (HDD), a Solid State Drive (SSD), or a flash memory and stores various programs including an operating system and various data. The information processing program may be stored in storage 64.

In the control device 60, the CPU 61 reads various programs including the information processing program from the ROM 62 or from the storage 64 and executes the programs by using the RAM 63 as a work area. The CPU 61 executes the information processing program to implement various functions.

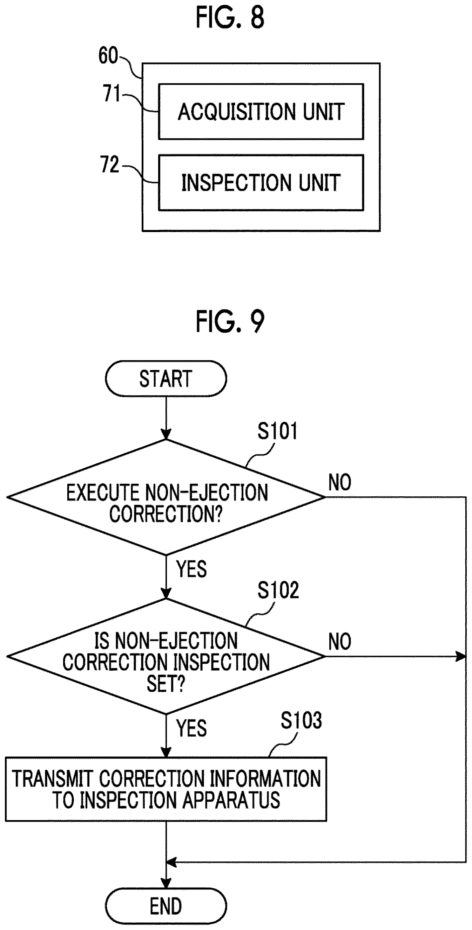

In the control device 60, the CPU 61 executes the information processing program to function as an acquisition unit 71 and an inspection unit 72 as shown in Fig. 8.

The acquisition unit 71 acquires the inspection data generated by the image scanning unit 52 and the RIP data. The RIP data is acquired from the image forming apparatus 14 or the image processing system 12. In addition, the acquisition unit 71 acquires the correction information transmitted from the image forming apparatus 14.

The inspection unit 72 is a functional unit that inspects the image scanned by the image scanning unit 52 based on the RIP data. Specifically, the inspection unit 72 inspects the image by comparing the inspection data with the RIP data. The inspection unit 72 determines an image defect (NG) in a case where, for example, there is a difference as a result of comparing the inspection data with the RIP data.

Further, in a case of executing the non-ejection correction in the image forming apparatus 14, the inspection unit 72 executes the inspection after the acquisition unit 71 acquires the correction information. In addition, in a case of executing the non-ejection correction in the image forming apparatus 14, the inspection unit 72 performs inspection while lowering the inspection accuracy. Specifically, the inspection unit 72 executes an inspection process which will be described below.

### <Transmission Process According to Present Exemplary Embodiment>

Next, the example of the transmission process according to the present exemplary embodiment will be described. Fig. 9 is a flowchart showing an example of a flow of the transmission process executed in the image forming apparatus 14.

The present process is performed by the CPU 21 reading and executing the information processing program from the ROM 22 or the storage 24. In the present process, as an example, in a case where the CPU 21 acquires an execution instruction to cause the image forming apparatus 14 to execute the image forming process, the execution is started. The CPU 21 may be configured to, for example, execute the transmission process in a case where information indicating that the inspection apparatus 50 starts to execute the inspection or a transmission instruction to transmit the correction information to the inspection apparatus 50 is acquired from the inspection apparatus 50.

As shown in Fig. 9, in a case where the present process is started, the CPU 21 starts first determines whether or not the image forming apparatus 14 executes the non-ejection correction (step S101).

In a case where the CPU 21 determines that the image forming apparatus 14 executes the non-ejection correction (step S101: YES), the CPU 21 transitions to step S102, and, in a case where the CPU 21 determines that the image forming apparatus 14 does not execute the non-ejection correction, the CPU 21 ends the present process without transmitting the correction information to the inspection apparatus 50.

In step S102, the CPU 21 determines whether or not the non-ejection correction inspection is set. In step S102, in a case where the CPU 21 determines that the non-ejection inspection is set (step S102: YES), the CPU 21 transitions to step S103, and, in a case where the CPU 21 determines that the non-ejection inspection is not set (that is, the normal inspection is set) (step S102: NO), the CPU 21 ends the present process without transmitting the correction information to the inspection apparatus 50. A configuration may be provided in which, in a case where the normal inspection is set, the CPU 21 transmits information indicating the setting of the normal inspection to the inspection apparatus 50.

In step S103, the CPU 21 executes the transmission process to transmit the correction information to the inspection apparatus 50. The CPU 21 acquires various correction information from the storage 24 and transmits the correction information to the inspection apparatus 50. As described above, the correction information includes the execution information indicating the execution of the non-ejection correction in the image forming apparatus 14, the position information indicating the position of the non-ejection nozzle 32B, the accuracy information indicating the inspection accuracy set by the user, and the like.

### <Inspection Process According to Present Exemplary Embodiment>

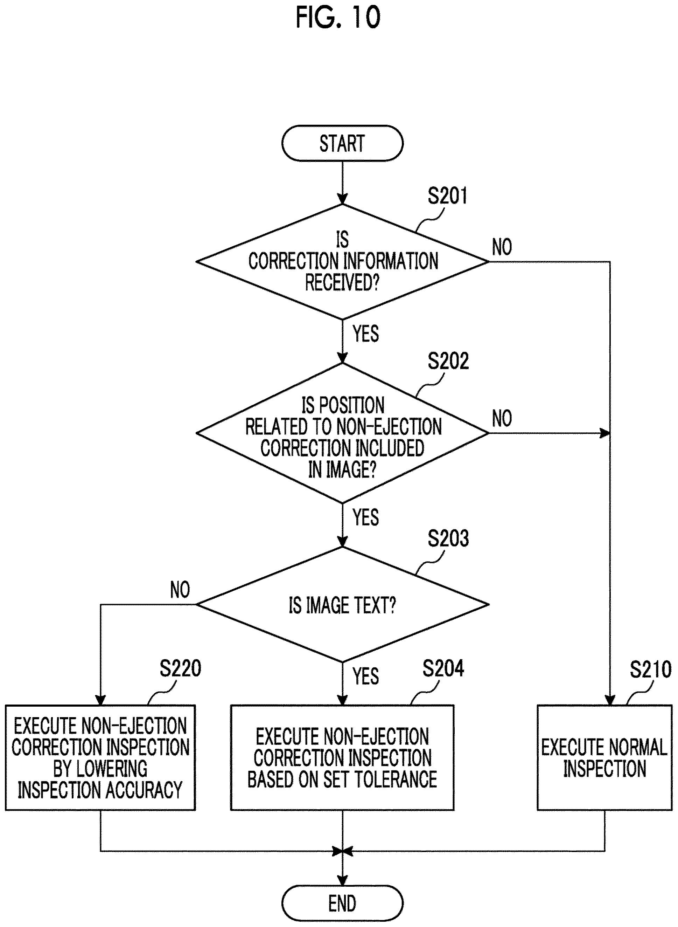

Next, an example of the inspection process according to the present exemplary embodiment will be described. Fig. 10 is a flowchart showing an example of the flow of the inspection process executed in the inspection apparatus 50.

The present process is performed by the CPU 61 reading and executing the information processing program from the ROM 62 or the storage 64. In the present process, as an example, in a case where the CPU 61 acquires an execution instruction to cause the inspection apparatus 50 to execute the inspection process, the execution is started. The CPU 61 may be configured to, for example, execute the inspection process in a case where an execution instruction of the image forming process in the image forming apparatus 14 is acquired.

As shown in Fig. 10, in a case where the present process is started, the CPU 61 first determines whether or not the correction information is received from the image forming apparatus 14 (step S201). In a case where the CPU 61 determines that the correction information is received (acquired) from the image forming apparatus 14 (step S201: YES), the CPU 61 transitions to step S202, and, in a case where the CPU 61 determines that the correction information is not received from the image forming apparatus 14 (step S201: NO), the CPU 61 executes the normal inspection (step S210) and ends the present process.

In step S202, the CPU 61 determines whether or not the position (that is, the position of the non-ejection nozzle 32B) related to the non-ejection correction is included in the image formed by the image forming apparatus 14. In step S202, in a case where the CPU 61 determines that the position related to the non-ejection correction is included in the image formed by the image forming apparatus 14 (step S202: YES), the CPU 61 transitions to step S203, and, in a case where the CPU 61 determines that the position related to the non-ejection correction is not included in the image formed by the image forming apparatus 14 (step S202: NO), the CPU 61 executes the normal inspection (step S210) and ends the present process.

In step S203, the CPU 61 determines whether or not the image at the position related to the non-ejection correction is a text. In step S203, in a case where the CPU 61 determines that the image at the position related to the non-ejection correction is a text (step S203: YES), the CPU 61 transitions to step S204, and, in a case where the CPU 61 determines that the image at the position related to the non-ejection correction is not a text (that is, the image area) (step S203: NO), the CPU 61 transitions to step S220.

In step S204, the CPU 61 executes the non-ejection correction inspection based on the tolerance set by the user and ends the present process. In step S220, the CPU 61 executes the non-ejection correction inspection by lowering the inspection accuracy and finishes the present process. Since the image area does not require high-precision inspection compared to the text, in the present exemplary embodiment, for example, the image inspection is executed with a predetermined inspection accuracy lower than the normal inspection.

### <Action According to Present Exemplary Embodiment>

In the present exemplary embodiment, in a case of executing the non-ejection correction in the image forming apparatus 14, the CPU 21 executes a process of transmitting the correction information to the inspection apparatus 50 (step S103). Therefore, the inspection apparatus 50 may perform the image inspection in consideration of the correction information.

In addition, in the present exemplary embodiment, the correction information includes execution information indicating the execution of the non-ejection correction in the image forming apparatus 14, and position information indicating the position of the non-ejection nozzle 32B. Therefore, the image inspection may be performed in consideration of the execution information and the position information.

In addition, in the present exemplary embodiment, the correction information includes accuracy information indicating the inspection accuracy set by the user. Therefore, the inspection apparatus 50 may perform the image inspection in consideration of the accuracy information.

In addition, in the present exemplary embodiment, the CPU 21 transmits the correction information to the inspection apparatus 50 in a case where the non-ejection correction inspection is set (step S102: YES) as the inspection mode of the inspection apparatus 50 (step S103). Therefore, in a case where the non-ejection correction inspection is set, the inspection apparatus 50 may perform the image inspection in consideration of the correction information.

In addition, in the present exemplary embodiment, in a case where the normal inspection is set as the inspection mode of the inspection apparatus 50 (step S102: NO), the CPU 21 does not execute the transmission of the correction information to the inspection apparatus 50. Therefore, unnecessary transmission of the correction information to the inspection apparatus 50 is suppressed, as compared with a case where the CPU 21 constantly executes the transmission of the correction information to the inspection apparatus 50.

In addition, in the present exemplary embodiment, the CPU 21 notifies the user of the set inspection mode via the display unit 35. Therefore, the user may recognize the set inspection mode.

Further, in the present exemplary embodiment, in the inspection apparatus 50, in a case of executing the non-ejection correction in the image forming apparatus 14, the CPU 61 performs the image inspection after acquiring the correction information. Therefore, the inspection apparatus 50 may perform the image inspection in consideration of the correction information.

Further, in the present exemplary embodiment, in the inspection apparatus 50, in a case of executing the non-ejection correction in the image forming apparatus, the CPU 61 performs the image inspection by lowering the inspection accuracy. Therefore, the inspection defect is suppressed compared to a case of performing the inspection with a certain inspection accuracy, regardless of a case of executing the non-ejection correction in the image forming apparatus 14.

### <Modification Example>

In the present exemplary embodiment, the image forming system 10 is an example of the information processing system, but for example, the image forming apparatus 14 may be understood as an example of the information processing system.

In addition, an apparatus including the processor that executes the transmission process may be configured as an external apparatus existing outside the image forming apparatus 14. In this case, the external apparatus or a system including the external apparatus can be understood as an example of the information processing system.

In addition, an apparatus including the processor that executes the inspection processing may be configured as an external apparatus existing outside the inspection apparatus 50. In this case, the external apparatus or the system including the external apparatus can be understood as the information processing system.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In addition, the information processing system according to the present exemplary embodiment is not limited to be configured with a plurality of apparatuses, and may be configured with a single device. That is, the "system" in the present exemplary embodiment may be configured with a plurality of apparatuses, and may be configured with a single apparatus.

The present invention is not limited to the above-mentioned exemplary embodiment, and various modifications, changes, and improvements can be made without departing from the scope of the present invention. For example, the above-described modification examples may be configured by combining a plurality of the modification examples as appropriate.

### <Supplementary Note>

(((1))) An information processing system comprising:
   a processor configured to:
   in a case of executing non-ejection correction of increasing an ejection amount of a nozzle adjacent to a non-ejection nozzle in an image forming apparatus that forms an image by ejecting liquid droplets from a plurality of nozzles based on image data, transmit correction information related to the non-ejection correction to an inspection apparatus that scans an image formed by the image forming apparatus and inspects the image.
(((2))) The information processing system according to (((1))),
   wherein the correction information includes information indicating execution of the non-ejection correction and information indicating a position of the non-ejection nozzle.
(((3))) The information processing system according to (((2))),
   wherein the correction information includes information indicating an inspection accuracy set by a user.
(((4))) The information processing system according to any one of (((1))) to (((3))), wherein the processor is configured to:
   in a case where an inspection mode based on the non-ejection correction is set as an inspection mode of the inspection apparatus, transmit the correction information related to the non-ejection correction to the inspection apparatus .
(((5))) The information processing system according to (((4))), wherein the processor is configured to:
   in a case where normal inspection is set as the inspection mode of the inspection apparatus, not execute the transmission of the correction information to the inspection apparatus.
(((6))) The information processing system according to (((5))), wherein the processor is configured to:
   notify a user of the set inspection mode via a notification unit.
(((7))) An information processing program causing a computer to execute a process comprising:
   in a case of executing non-ejection correction of increasing an ejection amount of a nozzle adjacent to a non-ejection nozzle in an image forming apparatus that forms an image by ejecting liquid droplets from a plurality of nozzles based on image data, transmitting correction information related to the non-ejection correction to an inspection apparatus that scans an image formed by the image forming apparatus and inspects the image.
(((8))) An inspection apparatus comprising:
   a scanning unit that scans an image formed by an image forming apparatus that forms an image by ejecting liquid droplets from a plurality of nozzles based on image data; and
   an inspection unit that inspects the image scanned by the scanning unit based on the image data, and, in a case of executing non-ejection correction of increasing an ejection amount of a nozzle adjacent to a non-ejection nozzle in the image forming apparatus, performs inspection after acquiring information related to the non-ejection correction.
(((9))) The inspection apparatus according to (((8))),
   wherein the inspection unit performs the inspection by lowering an inspection accuracy in a case of executing the non-ejection correction in the image forming apparatus.

According to the configuration of (((1))), the inspection apparatus can perform the inspection in consideration of the information related to the non-ejection correction.

According to the configuration of (((2))), the inspection apparatus can perform the inspection in consideration of the information indicating the execution of the non-ejection correction and the information indicating the position of the non-ejection nozzle.

According to the configuration of (((3))), the inspection apparatus can perform the inspection in consideration of the information indicating the inspection accuracy set by the user.

According to the configuration of (((4))), in a case where the inspection mode based on the non-ejection correction is set, the inspection apparatus can perform the inspection in consideration of the information related to the non-ejection correction.

According to the configuration of ((5)), unnecessary transmission of the correction information to the inspection apparatus can be suppressed, as compared with a case where the processor constantly executes the transmission of the correction information to the inspection apparatus.

According to the configuration of (((6))), the user can recognize the set inspection mode.

According to the configuration of (((7))), the inspection apparatus can perform the inspection in consideration of the information related to the non-ejection correction.

According to the configuration of (((8))), the inspection apparatus can perform the inspection in consideration of the information related to the non-ejection correction.

According to the configuration of (((9))), the inspection defect is suppressed compared to a case of performing the inspection with a certain inspection accuracy regardless of a case of executing the non-ejection correction in the image forming apparatus.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming system (example of information processing system)
14: image forming apparatus
21: CPU (example of processor)
32A: nozzle
32B: non-ejection nozzle
32C: adjacent nozzle
35: display unit (example of notification unit)
50: inspection apparatus
72: inspection unit

## Claims

1. An information processing system comprising:
a processor configured to:
in a case of executing non-ejection correction of increasing an ejection amount of a nozzle adjacent to a non-ejection nozzle in an image forming apparatus that forms an image by ejecting liquid droplets from a plurality of nozzles based on image data, transmit correction information related to the non-ejection correction to an inspection apparatus that scans an image formed by the image forming apparatus and inspects the image.

2. The information processing system according to claim 1,
wherein the correction information includes information indicating execution of the non-ejection correction and information indicating a position of the non-ejection nozzle.

3. The information processing system according to claim 2,
wherein the correction information includes information indicating an inspection accuracy set by a user.

4. The information processing system according to any one of claims 1 to 3, wherein the processor is configured to:
in a case where an inspection mode based on the non-ejection correction is set as an inspection mode of the inspection apparatus, transmit the correction information related to the non-ejection correction to the inspection apparatus.

5. The information processing system according to claim 4, wherein the processor is configured to:
in a case where normal inspection is set as the inspection mode of the inspection apparatus, not execute the transmission of the correction information to the inspection apparatus.

6. The information processing system according to claim 5, wherein the processor is configured to:
notify a user of the set inspection mode via a notification unit.

7. An information processing program causing a computer to execute a process comprising:
in a case of executing non-ejection correction of increasing an ejection amount of a nozzle adjacent to a non-ejection nozzle in an image forming apparatus that forms an image by ejecting liquid droplets from a plurality of nozzles based on image data, transmitting correction information related to the non-ejection correction to an inspection apparatus that scans an image formed by the image forming apparatus and inspects the image.

8. An inspection apparatus comprising:
a scanning unit that scans an image formed by an image forming apparatus that forms an image by ejecting liquid droplets from a plurality of nozzles based on image data; and
an inspection unit that inspects the image scanned by the scanning unit based on the image data, and, in a case of executing non-ejection correction of increasing an ejection amount of a nozzle adjacent to a non-ejection nozzle in the image forming apparatus, performs inspection after acquiring information related to the non-ejection correction.

9. The inspection apparatus according to claim 8,
wherein the inspection unit performs the inspection by lowering an inspection accuracy in a case of executing the non-ejection correction in the image forming apparatus.
